# EUROPEAN PATENT SPECIFICATION

(11) **EP 3 157 396 B1**
(45) Date of publication and mention of the grant of the patent: **25.07.2018**
(21) Application number: 15731292.7
(22) Date of filing: 19.06.2015
(51) Int. Cl.: A47J 31/40, A47J 31/42

(54) **BEVERAGE PREPARATION MACHINE WITH REFILLABLE MULTI-DOSE CONTAINER**
GETRÄNKEHERSTELLUNGSMASCHINE MIT WIEDERAUFFÜLLBAREM MEHRFACHDOSIERUNGSBEHÄLTER
MACHINE DE PRÉPARATION DE BOISSONS AVEC RÉCIPIENT MULTIDOSE RECHARGEABLE

(30) Priority: 20.06.2014 EP 14173268
(43) Date of publication of application: 26.04.2017
(73) Proprietor: Nestec S.A., 1800 Vevey (CH)
(72) Inventor: PAILLARD, Olivier, 25370 Les Hôpitaux Neufs (FR); MIEVILLE, Yann, 1405 Pomy (CH); BUTSCHER, Silvio, 2054 Chézard-St-Martin (CH); DELACRETAZ, Charles-Henri, 1354 Montcherand (CH)
(74) Representative: Ducreux, Marie
(86) International application number: PCT/EP2015/063850
(87) International publication number: WO 2015/193489

(56) References cited:
- WO-A1-2012/084964
- WO-A2-2009/000836

## Description

### Field of the invention

The present invention relates to a machine for preparing beverages from a flowable beverage ingredient and comprising a refillable multi-dose container used for storing said flowable ingredient.

### Background of the invention

It is known to prepare hot or cold beverages with beverage preparation machine. In a conventional beverage machine, a metered amount of water soluble beverage powder, stored in powder refillable tank, and a metered amount of hot or cold water, supplied from a water source, are mixed to produce a beverage or food, either in a chamber dedicated to mixing or in a cup.

WO 2009/000836 describes a machine with a powder refillable tank that can be refilled with specific powder cartridges. This machine enables an easy and proper refilling : there is no significant loss of powder during the transfer of the powder from the refilling tank to the tank to be refilled. This machine has been commercialised under trademark Barista. The user manual prompts the users to remove the refilling tank from the machine during the refilling operation. This recommendation aims to avoid that beverage ingredient powder falls inside the machine if the user makes a mistake during refilling for example removes the cartridge from the powder refiling tank before all the powder has been transferred in the tank. This recommendation prompts also the user to check the cleanliness of the tank when said tank is removed from the machine. Due to the transparency of the material the tank is made of, the user can notice that a cleaning is necessary.

Although the user manual provides recommendations it has been observed that most of the consumers do not remove the tank from the machine during the refilling operation. Consequently the above mentioned problems have occurred leading to the returns of machines to after-sales service.

Apart from the above issues there is also a constant demand of the users for machines presenting a reduced size, in order to reduce footprint or height in the kitchens. Yet even if the machine is smaller, the volume of the powder refilling tank shall not be reduced because it must remain refillable with current existing cartridges (which present a volume of bulk ingredient of at most 500 ml).

The object of the present invention is to propose a beverage preparation machine for which the user is urged to remove the tank from the machine for refilling.

Another object of the present invention is to a beverage preparation machine presenting a reduced size.

### Summary of the invention

According to a first aspect, the invention concerns a machine for preparing beverages from a bulk beverage ingredient comprising :
- a refillable multi-dose storing container for storing the bulk beverage ingredient, said container presenting a storing volume defined between an opened bottom wall, a top wall and lateral walls, and said refillable multi-dose storing container comprising an opening for refilling the container with a bulk beverage ingredient and a removable cover for closing the opening for refilling the container,
- a dosing unit for dosing the stored bulk beverage ingredient, said dosing unit cooperating with the opened bottom of the refillable multi-dose storing container,
wherein the machine comprises a receiving area for removably receiving the assembly of the refillable multi-dose storing container and the dosing unit positioned at the bottom of the container, and
wherein the opening for refilling the container with a bulk beverage ingredient is positioned on one first portion of the lateral walls of the refillable multi-dose storing container.

The machine of the present invention prepares beverages from a bulk beverage ingredient. The bulk beverage ingredient can be a powder, pellets or granules, generally of agglomerated powder. The beverage ingredient is preferably a soluble beverage ingredient like instant coffee, instant tea, milk powder, chocolate powder.

The machine prepares the beverage by contacting the beverage ingredient with a diluent, preferably water. The beverage ingredient and the diluent can be contacted by any device like : a jet(s) head, a mixing bowl, a whipper bowl, a brewing chamber.

The machine comprises a container for storing the bulk beverage ingredient. The container is used to deliver individual doses of bulk ingredient and aims at storing this product before it is dosed ; it is why it is defined as a multi-dose container.

The storing volume of the container is defined between an opened bottom wall, a top wall and lateral walls. The bottom wall is opened so as to deliver the beverage ingredient to the dosing unit positioned at the bottom of the storing container. Due to gravity the beverage ingredient falls in the dosing unit. The container can be of any form. The container comprises an opening for refilling the container with a bulk beverage ingredient and according to the invention said refilling opening is positioned on one first portion of the lateral walls of the refillable multi-dose storing container. Due to the position of the refilling opening on the lateral side of the container, the user is not able to refill the container while the container is positioned inside the machine. Firstly because the refill opening is not at the top of the container and the bulk ingredient cannot flow by gravity in the container. Secondly because the container is positioned in a receiving area of the machine, said receiving area blocking the access to the refilling opening.

This refilling opening can present any form either circular, oval, square, ... Preferably it corresponds to the form of the cartridge outlet used for refilling the refillable multi-dose container, for example for avoiding the erroneous refilling with a wrong product. In its simpler and easier form, it is circular.

Generally the container comprises a removable cover for closing the opening for refilling the container. This cover hermetically closes the container so that no bulk material can escape from this refilling opening when the container is oriented according to its operational position in the machine that is with the refilling opening oriented in the lateral wall. According to the preferred embodiment the container is made of a transparent material. So the user is able to check the level of bulk material in the container visually.

According to the preferred embodiment one second portion of the lateral walls of the refillable multi-dose storing container opposed to the first portion of the lateral walls presents a shape such that when the refillable multi-dose storing container is removed from the machine, the container can rest on a flat horizontal surface with the opening for refilling the container facing upwards. Due to this configuration it is practical for the user to position the container outside of the machine on a flat horizontal work surface with the refill opening on the first portion of the container facing upwards.

According to one embodiment, said second portion of the lateral walls presents at least two points of contact with a flat surface to provide stability to the container during the refill operation. Preferably said second portion presents at least two flat portions oriented in the same plane.

According to another embodiment the second portion of the lateral walls of the refillable multi-dose storing container opposed to the first portion of the lateral walls is a plane. This plane acts as a flat bottom for the container when it is put on a flat surface.

According to the preferred embodiment the refillable multi-dose storing container comprises at least one, preferably two, leg(s) extending from the surface of the second portion of the lateral walls in a direction essentially parallel to the axis between the bottom and the top of the container. The leg(s) improve the stabilisation of the container on a flat surface during the refilling of the container.

Preferably the end of each leg comprises a flat portion that can rest on a flat surface.

Preferably the leg(s) extend(s) from the second portion of the lateral side in direction of the bottom of the tank. Advantageously when the tank is introduced in the receiving area of the machine these leg(s) is/are introduced first. Optionally the leg(s) can guide the movement of the user. Preferably, the receiving area presents at least one, preferably two, housing(s) in which the at least one, preferably two, leg(s) of the container engage respectively.

According to the preferred embodiment of the container:
- a second portion of the lateral walls of the container presents at least one, preferably two, point(s) of contact with a flat surface, and
- the container comprises two legs, and
the two points of contact and the legs being positioned one relative to the others to provide stability during the refilling of the container.

Preferably the refillable multi-dose storing container comprises a magnet or metallic piece, said magnet or metallic piece being positioned in order to cooperate with a metallic piece or magnet respectively inside the receiving area of the beverage preparation machine. The magnet and metallic pieces act as a sensor sensing the presence or the absence of the container inside the machine. This sensor is linked to the process control unit of the machine so that the motor for dosing powder from the container cannot be activated if the container is not positioned inside the machine. It aims to avoid that the fingers of a user are injured by the machine.

When the refillable multi-dose storing container comprises at least one, preferably two, leg(s) extending from the second portion of the lateral side and the magnet or metallic piece is positioned at the end of said leg(s). It is preferably inserted inside the material the container is made of.

The machine comprises a dosing unit for dosing the stored bulk beverage ingredient. The dosing unit cooperates with the opened bottom of the refillable multi-dose storing container. The dosing unit cooperates so that it simultaneously closes the opened bottom of the container and so that it is able to dose the bulk material stored in the container. Generally the dosing unit is attached to the opened bottom of the container through removable connecting means like screw threads or cooperating slots and pins in the dosing unit and in the container. Consequently the container and the dosing unit can be either connected to each other when they are operational inside the machine or for refilling or they can be separated one from the other for the purpose of cleaning each element for example. When the both elements are attached together they form an assembly that can be received in a receiving area of the machine. preferably this receiving area presents a shape that fits with the external shape of the assembly.

Generally the dosing unit is a volumetric dosing unit comprising a chamber of predefined volume through which a dose of bulk ingredient is introduced and then dispensed downwards to another part of the machine. It can be a barrel, a sliding chamber, a rotary pierced disc. Preferably the dosing unit comprises :
- a fixed body comprising at least a disc presenting a single pierced aperture,
- a rotary top disc disposed on the top of the fixed body and presenting a taking out pierced aperture,
- a rotary bottom disc disposed on the bottom of the fixed body and presenting a discharging pierced aperture,
- a rotary shaft connecting the bottom disc and the top disc,
wherein in the stand-by position of the device the metered pierced aperture is empty and closed to the humidity. Such a dosing unit is described in WO 2009/144239.

According to the preferred embodiment the machine presents a refillable multi-dose storing container with a refilling opening that presents an interface for cooperating with a cartridge of bulk beverage ingredient, said cartridge comprising :
- a vessel presenting a closed end and an opened end,
- a hopper placed inside the vessel and tapering to a discharge outlet in direction of the vessel opened end, said discharge outlet presenting a section smaller than the section of the refilling opening of the refillable multi-dose storing container.

Preferably the cartridge comprises a tearable membrane closing the hopper and the vessel. Such cartridges such as above are described in WO 2009/000810, WO 2009/130313 or WO 2009/130315.

According to one preferred embodiment the interface between the refilling opening and the cartridge comprises :
- several ribs extending from the internal wall of the refilling opening to the centre of the refilling opening,
- a cone supported by the ribs, the top of said cone being centred on the centre of the refilling opening and the surface of the cone extending in direction of the internal wall of the refilling opening down to a base, and
- a slot between the base of the cone and the internal wall of the refilling opening.

The cone is sufficiently inclined so that the top of the cone is able to pierce the tearable membrane of the cartridge and so that the bulk beverage ingredient is able to flow on the surface the cone down to the slot by gravity. Simultaneously, the cone is not too much inclined so as to not present a too important height above the refilling opening. Generally the angle at the top of the cone presents a value of about 110°.

Generally the machine comprises a diluent supply. The diluent supply can comprise a diluent tank, a diluent pump and a diluent heating and/or cooling device.

Preferably the machine comprises a mixing chamber in order to mix a dose of beverage ingredient dosed from the storing container with the diluent. The mixing chamber is preferably a dissolution chamber for preparing a beverage from the beverage ingredient and a diluent Generally the dissolution chamber comprises an opened top to receive the beverage ingredient dose, at last one diluent inlet and a beverage outlet at the bottom.

According to one embodiment the dissolution chamber comprises at least one diluent inlet configured for introducing the diluent in the form of a jet inside the chamber. The chamber is preferably configured so that a whirlpool of liquid is created in the chamber and the jet of diluent hits said whirlpool. Such a dissolution chamber is described in WO 2008/071613. According to the preferred embodiment said dissolution chamber comprises two water inlets positioned at different heights in the chamber. Preferably the higher inlet is close to the top. Diluent introduced through the higher inlet is usually used to rinse the chamber after a beverage preparation or to prepare big sized beverages

According to another embodiment the dissolution chamber comprises a bowl and a whipper. The whipper is actuated by a motor to mix and usually froth the mixture of powder and diluent.

Usually the dissolution chamber is positioned under the powder outlet of the container so that the powder can be delivered from the container in the chamber by gravity fall.

Generally the top of the dissolution chamber is opened so that powder can freely flow inside by gravity fall. By opened it is meant that the top of the chamber is not covered e.g. by a lid.

The diluent inlet is connected to a diluent supply. The diluent is generally water. The diluent supply generally comprises a diluent tank, a pump, a diluent heater and/or a diluent cooler and valves to deliver the requested diluent in the chamber.

Yet any type of device currently known for contacting a beverage ingredient and diluent can be used like jet(s) delivering diluent jet in a drinking cup.

According to a second aspect the invention concerns a system for preparing a beverage by mixing a bulk beverage ingredient with a diluent comprising :
- a machine such as described above, and
- a cartridge of bulk beverage ingredient, said cartridge comprising :
   - a vessel presenting a closed end and an opened end,
   - a hopper placed inside the vessel and tapering to a discharge outlet in direction of the vessel opened end, said discharge outlet presenting a section smaller than the section of the refilling opening of the refillable multi-dose storing container.

Preferably the cartridge for storing the flowable beverage ingredient comprises a tearable membrane closing the hopper and the vessel. Such a tearable function can be obtained by making small perforations through the membrane that would enable the tear of the membrane. So the membrane can present tear lines.

According to a third aspect the invention concerns a process for refilling a machine such as described above comprising at least the steps of :
- removing the assembly of the refillable multi-dose storing container and the dosing unit cooperating with the opened bottom of the refillable multi-dose storing container,
- removing the removable cover of the refilling opening,
- refilling the refillable multi-dose storing container through the refilling opening,
- placing the removable of the refilling opening back,
- introducing the assembly of the refillable multi-dose storing container and the dosing unit into the machine back.

According to a last aspect the invention concerns a cartridge of bulk beverage ingredient, said cartridge comprising :
- a vessel presenting a closed end and an opened end,
- a hopper placed inside the vessel and tapering to a discharge outlet in direction of the vessel opened end, said discharge outlet presenting a section smaller than the section of the refilling opening of the refillable multi-dose storing container,
to refill the refillable multi-dose storing container of a machine such as described hereabove.

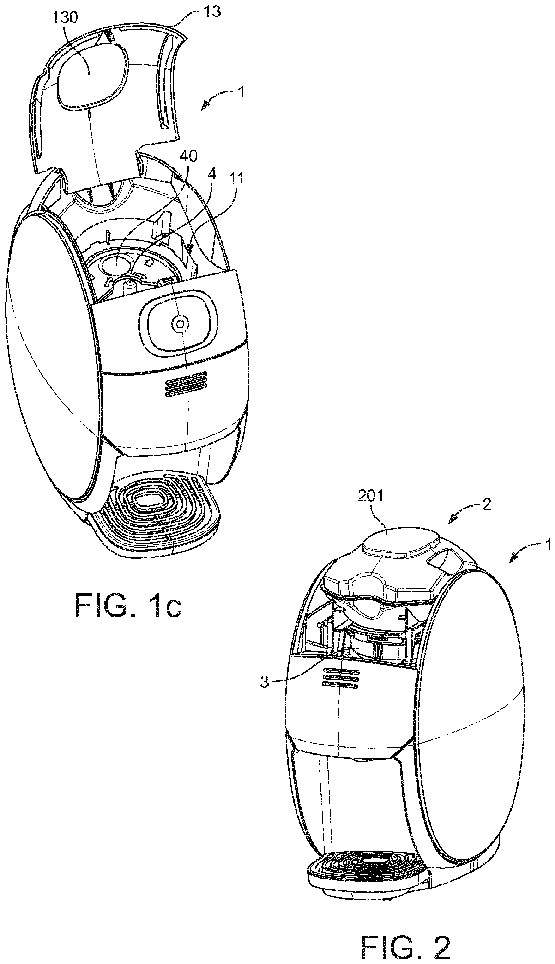

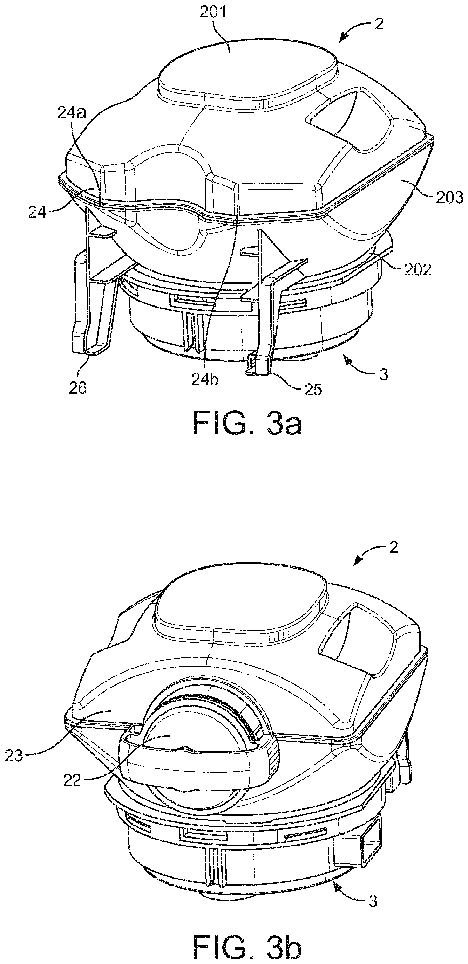

In the present application the terms "bottom", "top", "lateral", and "horizontal" are used to describe the relational positioning of features of the invention. These terms should be understood to refer to the refillable multi-dose storing container in its normal orientation when introduced in a beverage preparation machine for the production of a beverage as shown for example in Figures 2, 3a and 3b.

### Brief description of the drawings

The characteristics and advantages of the invention will be better understood in relation to the following figures, in which :
- Figures 1a-1c are views of a beverage preparation machine according to the present invention,
- Figure 2 corresponds to Figure 1 in which the cover has been removed,
- Figures 3a and 3b are two perspective views of the refillable multidose container of the machine as positioned inside the machine,
- Figure 3c is a perspective view of the refillable multidose container alone,
- Figure 4 is a top view of the machine from which the container has been removed,
- Figure 5 is a view of the refillable multidose container removed from the machine and at rest on flat surface,
- Figure 6 illustrates the refillable multidose container of Figure 5 from which the removable cover has been removed,
- Figure 7a illustrates the removable cover of the container of Figure 5,
- Figure 7b is a top view of the interface extracted from the assembly of Figure 6,
- Figure 7c is a top view of the refillable multidose container such as positioned in Figure 5,
- Figure 7d is a cross section view according to section A-A of Figure 6,
- Figure 8 depicts an exploded view of a cartridge for refilling the container,
- Figures 9 and 10 are section views illustrating the interaction between the refillable multidose container and the cartridge during a refilling operation.

### Detailed description of the drawings

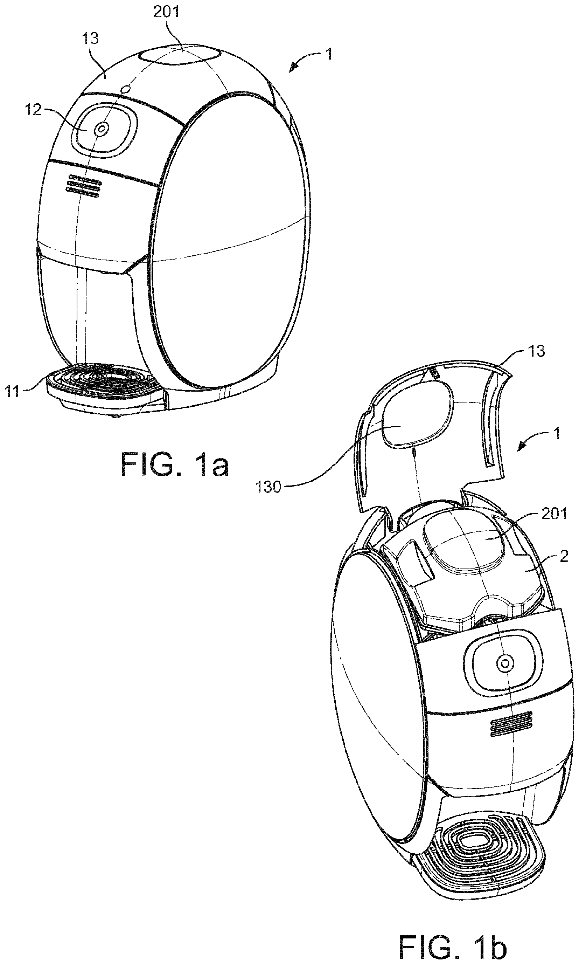

**Figure 1a** illustrates a machine for preparing beverage according to the present invention. The machine comprises a drip tray 11 for positioning a beverage cup, a user interface 12 for selecting and ordering a beverage and a cover 13 hiding a container of bulk beverage ingredient from which the beverage is prepared.

In **Figure 2** said cover 13 and the user interface panel 12 have been removed to show this multi-dose storing container 2 for storing the bulk beverage ingredient. Preferably at least the top wall 201 of the container is transparent, preferably the whole container is transparent, so that the user can control the level of beverage ingredient in the container. As illustrated in Figure 1 the top wall 201 of the container remains apparent even when the cover 13 is closed. Preferably the container presents notches 201a, 201b in its top wall 201 so that a user can easily catch and remove the by placing his/her fingers in the notches and pulling the container 2. Figure 2 shows a dosing unit 3 cooperating with the bottom 202 of the container. The dosing unit 3 and the container 2 are attached together by means of corresponding connecting means like screw threads or pins and slots. The two elements form an assembly so that when the user removes the container 2 from the machine the whole assembly of the container 2 and the dosing unit 3 is removed. The dosing unit 3 closes the opened bottom of the container 2.

**Figure 1b** illustrates the machine in which the cover 13 is opened. The centre of the cover presents a hole 130. Said hole 130 can present a shape that cooperates with at least a part of the top wall 201 of the container. Through the hole 130 and the transparent top wall 201 of the tank, the user can control the level of ingredient stored in the tank without opening the cover 13. **Figure 1c** illustrates the machine in which the cover 13 is opened and the container 2 has been removed. This figure illustrates the receiving area 11 in which the assembly of the container 2 and the dosing unit 3 can be positioned. At the surface of the receiving area 11 a shaft 4 emerges that is designed for cooperating with the dosing unit 3 and for actuating said unit. The receiving area 11 presents a hole 40 that is designed for cooperating with the dosing unit 3 and delivering the ingredient dosed by the dosing unit. These aspects of the receiving area 11 are described in WO 2009/144239.

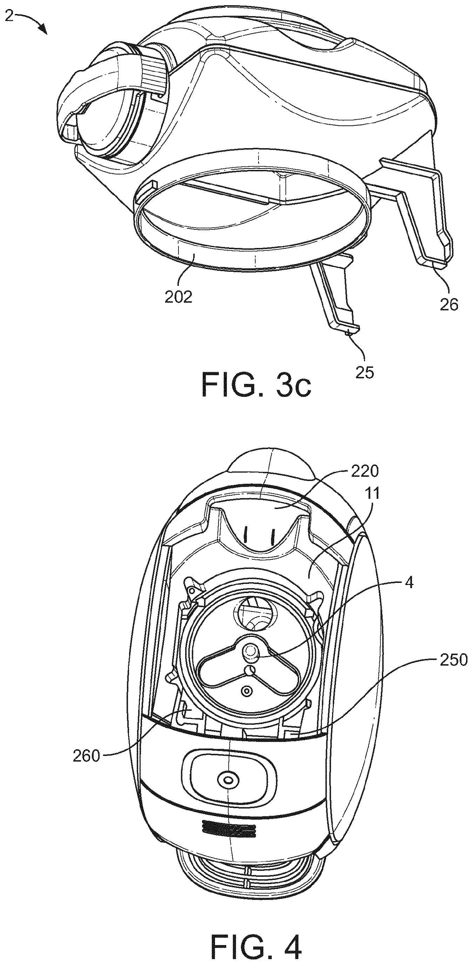

**Figures 3a and 3b** shows the assembly of the container 2 and the dosing unit 3 isolated from the rest of the machine but such as positioned inside the machine that is with the top wall 201 upwards, the bottom wall 202 downwards and the lateral walls 203 in between. Figure 3a is a front view such as in Figures 1 and 2 and Figure 3b is a view from the back. The dosing unit 3 can be detached from the container 2 as illustrated in Figure 3c. **Figure 3c** shows the opened bottom 202 of the refillable multi-dose storing container. The container presents two legs 25, 26 extending from the surface of the lateral side 203 of the container in direction of the bottom of the tank. These legs aim at positioning the container on a flat surface when it is removed from the machine as will be explained later. These legs also aim to help the user to correctly position the container in the receiving area 11.

**Figure 4** corresponds to the machine of Figure 2 from which the assembly of the container and the dosing unit has been removed. The machine presents an area 11 for receiving the assembly of the container and the dosing unit. The receiving area 11 presents two housings 250, 260 in which the legs 25, 26 of the container 2 can engage respectively. The receiving area 11 presents a housing 220 for positioning the cover 22 of the container 2 too. Preferably one of the legs 25, 26 comprises a magnet or a metallic piece inserted in the material the legs is made of (usually plastic) and the corresponding housing 250, 260 comprises a metallic piece or a magnet respectively to establish a contact between the leg and its housing when the user places the assembly in the machine and acts as a sensor detecting the presence of the container inside the receiving area.

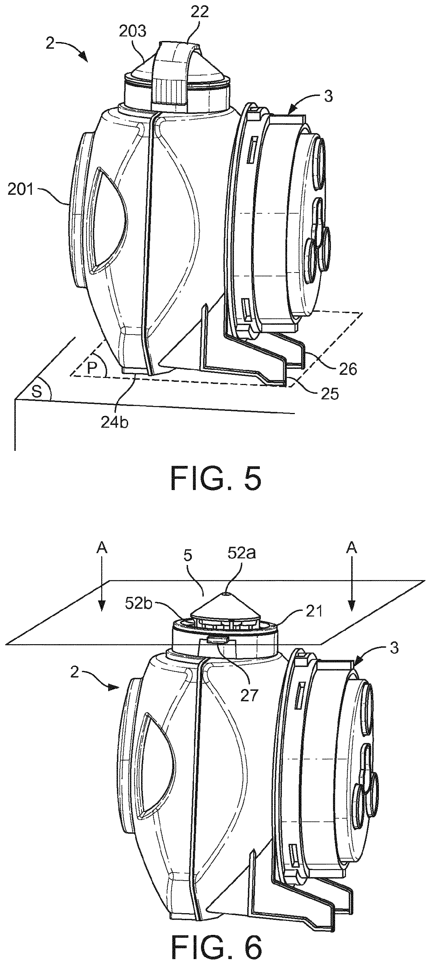

**Figure 5** illustrates the assembly of the container and the dosing unit removed from the machine and put on a flat surface S. In this position the container 2 is ready for refilling. As illustrated in Figure 3a and 3b the lateral walls 203 of the container 2 presents :
- one first portion 23 with the opening 22 for refilling the container, and
- one second portion 24 opposed to the first portion 23 presenting a shape such that when the refillable multi-dose storing container is removed from the machine, the container can rest on a flat horizontal surface S with the opening for refilling the container facing upwards. The second portion 24 presents two flat parts 24a, 24b for contacting the flat surface S. These flat parts 24a, 24b define a plane P corresponding to the flat surface S wen the assembly is placed on the surface S.

The two legs 25, 26 extend from the second portion 24 in direction of the bottom of the tank. They are essentially inside the plane P defined by the flat parts 24a, 24b. As a result of the shape of the second portion 24 of the lateral walls and the presence of the legs 25, 26, the assembly can be stably positioned on a flat surface with the refilling opening 21 positioned upwards.

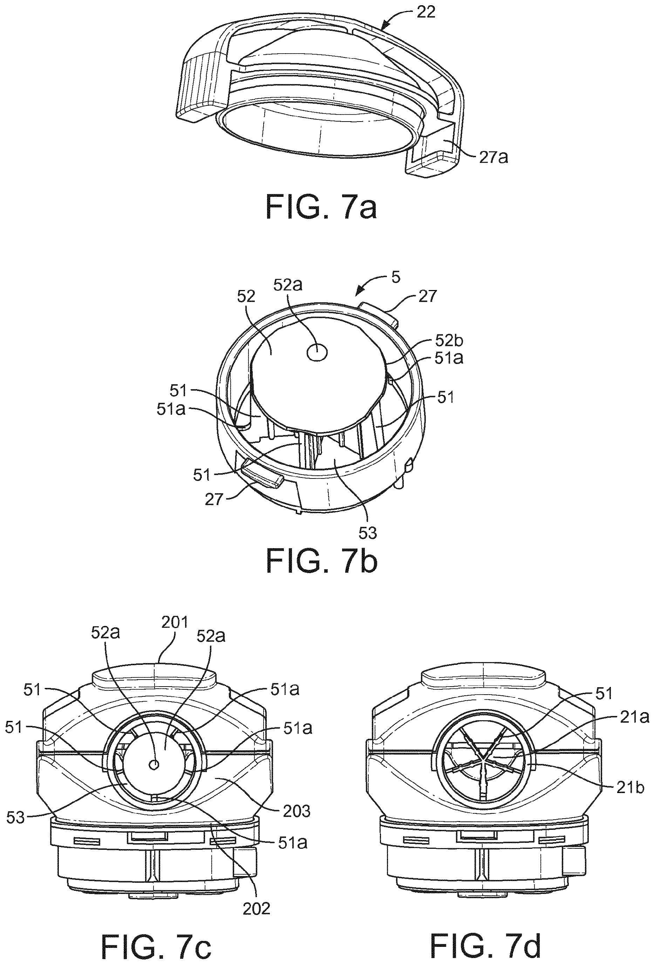

**Figure 6** illustrates the assembly of the container and the dosing unit wherein the cover 22 covering the refilling opening 21 has been removed. This cover is illustrated in **Figure 7a****.** The connection between the cover and the container comprises at least one simple tongue 27, radially extending from the lateral side of the opening 21 and configured for sliding in corresponding slits 27a of the cover 22. Any other connection means like screw threads, snapping means, ... can be used.

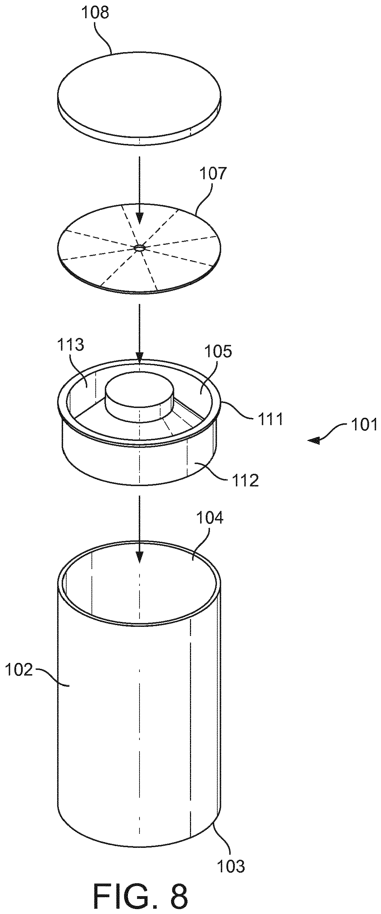

Figure 6 shows the interface 5 for connecting a cartridge of beverage ingredient to the container and refilling the container. The type of cartridge used for refilling the container 2 with the particular interface 5 illustrated in Figure 6 is depicted in Figure 8. **Figure 8** illustrates the cartridge 101 comprising a vessel 102 that is here a rigid cylinder presenting a closed end 103 and an opened end 104. The cartridge comprises a hopper 105 positioned inside the vessel volume and near to the opened end 104 of the vessel 102. Said hopper extends on the whole vessel section and tapers to a discharge outlet 106 that faces the opened end 104 of the vessel. The discharge outlet 106 comprises a cylinder coupled to the end of the hopper in order to guide the powder to the container interface. The membrane closes simultaneously the vessel opened end. The hopper is attached to a circular skirt or outside flange 112 which presents the same form as the internal wall of the vessel 102. This skirt fits inside the vessel 102 and helps positioning the hopper in the vessel. This skirt presents a stopping edge 111 that abuts against the vessel opened end edge and avoids the hopper sliding along the vessel wall. Due to the fact that the hopper is placed inside the vessel volume with its discharge outlet facing the vessel opened end, a groove 113 extends between the hopper tapering wall and the vessel wall along all the periphery of the hopper discharge outlet. A tearable membrane 107 is fixed above the opened end 104 of the vessel 102 and above the hopper discharge outlet 106 closing simultaneously the vessel opened end and the hopper tapered end. Lastly a protective cap 108 can be placed above the tearable membrane 107 in order to prevent the tearing of the membrane before the container is used for unloading its content. The protective cap 108 can be made of rigid or soft plastic or, according to a preferred mode, the protective cap 108 can be a soft flexible membrane removably stuck to the tearable membrane and that the user can detached by hand, for example by means of a pulling tab.

**Figure 7b** is a top view of the interface 5 extracted from the assembly illustrated in Figure 6 and **Figure 7c** is a top view of the assembly of Figure 6, the interface 5 cooperating with such a cartridge 101. The interface 5 comprises a cone 52 supported by five ribs 51. The ribs 51 extend from the internal wall 21b of the refilling opening to the centre 21a of the refilling opening. The top 52a of the cone is centred on the centre 21a of the refilling opening and the surface of the cone extends in direction of the internal wall 21b of the refilling opening down to its base 52b. The larger section of the cone 52 is smaller than the section of the opening 21 so that the cone and the opening defines a slot 53 between the base of the cone and the internal wall of the refilling opening through which bulk beverage ingredient can flow during refilling.

The cone is sufficiently inclined so that the top 52a of the cone is able to pierce the tearable membrane of the cartridge and so that the bulk beverage ingredient is able to flow on the surface the cone down to the slot 53 by gravity. Simultaneously, the cone is not too much inclined so as to not present a too important height above the refilling opening 21. Generally the angle at the top of the cone presents a value of about 110°. **Figure 7d** is a section view of the assembly of Figure 6 according to AA.

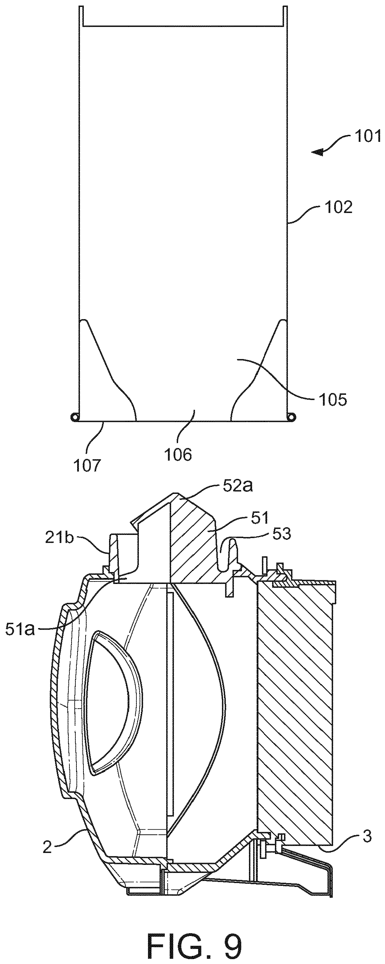

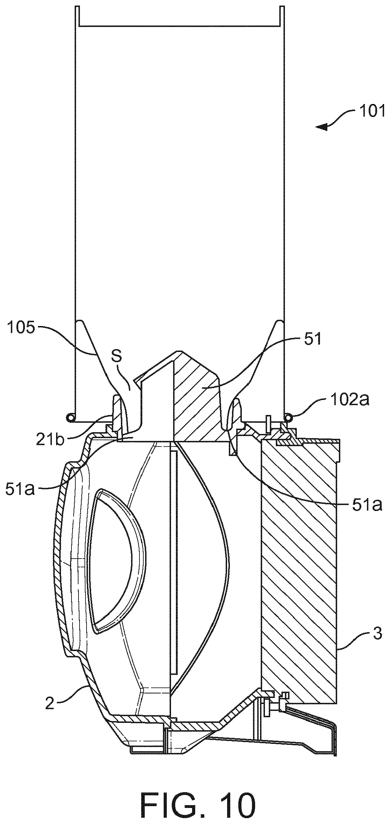

The invention relates to the system of the container 2 and the cartridge 101 for refilling the container as illustrated in **Figures 9** **and** **10**. In order to create cooperation between the cartridge and the container the discharge outlet 106 of the cartridge presents a section greater than the section of the base 52b of the cone and smaller than the section of the refilling opening 21. Consequently the discharge outlet of the cartridge is able to slide in the slot 53.

When the cartridge 101 is urged against the interface 5, first the centre 52a of the cone tears the tearable membrane 107 (from which the protective cap 108 has been removed). Then the discharge outlet 106 of the hopper slides in the slot 53 while the end 102a of the lateral side of the container surrounds the opening 21. As a consequence the membrane is torn and folded by the wall 51b of the opening away from the discharge outlet 106 of the hopper (the torn membrane of the cartridge is not represented in Figure 10). When the cartridge 101 is fully engaged in the interface, bulk ingredient slides along the internal slanted wall of the hopper 105a, then in the spaces between the ribs 51 and finally in the space of the container. As illustrated in Figure 10 once the cartridge is fully engaged inside the refilling opening, the lower parts 51b of the ribs supports the edge of the outlet 106 so that a space S is left to enable ingredient to flow from the surface of the cone down to the slot 53 and between the ribs 51. The support provided by the lower parts 51b of the ribs helps the user to sense until where he/she must pushed the cartridge against the interface of the container to get an optimised transfer of the bulk ingredient from the cartridge down to the container through space S.
- 1: beverage machine
- 11: drip tray
- 12: user interface
- 13: cover
- 130: cover hole
- 2: multidose refillable container"
- 21: refilling opening
- 21a: centre of refilling opening
- 21b: internal wall of refilling opening
- 22: cover
- 201: container top wall
- 202: container opened bottom
- 203: container lateral side
- 220: housing
- 23: first portion in the container lateral wall
- 24: second portion in the container lateral wall
- 24a, 24b: flat parts
- 25, 26: legs
- 250, 260: housings for legs
- 27: tongue
- 27a: slit
- 3: dosing unit
- 4: shaft
- 40: hole
- 5: interface
- 51: ribs
- 51a: lower part of the ribs
- 52: cone
- 52a: top of the cone
- 52b: base of the cone
- 53: slot
- 101: cartridge
- 102: vessel
- 102a: end of vessel lateral side
- 103: closed end
- 104: opened end
- 105: hopper
- 105a: hopper internal slanted wall
- 106: discharge outlet
- 107: tearable membrane
- 108: protective cap
- 111: stopping edge
- 112: skirt
- 113: groove

The machine of the present invention presents the advantage of presenting a smaller height compared to comparable prior art machines presenting a refillable multi-dose container.

The machine of the present invention presents the advantage of enabling refilling when the refillable multi-dose container is removed from the machine only. The user cannot refill the machine with the container positioned inside the machine.

## Claims

1. A machine (1) for preparing beverages from a bulk beverage ingredient, said machine comprising :
- a refillable multi-dose storing container (2) for storing the bulk beverage ingredient, said container presenting a storing volume defined between an opened bottom wall (201), a top wall (202) and lateral walls (203), and said refillable multi-dose storing container comprising an opening (21) for refilling the container with a bulk beverage ingredient and a removable cover (22) for closing said opening for refilling the container,
- a dosing unit (3) for dosing the stored bulk beverage ingredient, said dosing unit cooperating with the opened bottom 201 of the refillable multi-dose storing container, wherein the machine comprises a receiving area (11) for removably receiving the assembly of the refillable multi-dose storing container (2) and the dosing unit (3) positioned at the bottom of the container,
**characterized in that** the opening (21) for refilling the container with the bulk beverage ingredient is positioned on one first portion (23) of the lateral walls of the refillable multi-dose storing container.

2. A machine according to Claim 1, wherein one second portion (24) of the lateral walls of the refillable multi-dose storing container opposed to the first portion (23) of the lateral walls presents a shape such that when the refillable multi-dose storing container is removed from the machine, the container can rest on a flat horizontal surface (S) with the opening for refilling the container facing upwards.

3. A machine according to the precedent claim wherein the refillable multi-dose storing container comprises at least one, preferably two, leg(s) (25, 26) extending from the surface of the second portion of the lateral side in direction of the bottom of the tank.

4. A machine according to the precedent claim wherein the receiving area (11) presents at least one, preferably two, housing(s) (250, 260) in which the at least one, preferably two, leg(s) (25, 26) of the container engage respectively.

5. A machine according to any one of the precedent claims wherein the refillable multi-dose storing container (2) comprises a magnet or metallic piece, said magnet or metallic piece being positioned in order to cooperate with a metallic piece or magnet respectively inside the receiving area of the beverage preparation machine.

6. A machine according to any one of the precedent claims wherein the refilling opening (21) of the refillable multi-dose storing container presents an interface (5) for cooperating with a cartridge (101) of bulk beverage ingredient, said cartridge comprising :
• a vessel (102) presenting a closed end (103) and an opened end (104),
• a hopper (105) placed inside the vessel and tapering to a discharge outlet (106) in direction of the vessel opened end (104), said discharge outlet presenting a section smaller than the section of the refilling opening of the refillable multi-dose storing container (21).

7. A machine according to Claim 6 wherein the interface (5) comprises :
- several ribs (51) extending from the internal wall (21b) of the refilling opening to the centre of the refilling opening (21a),
- a cone (52) supported by the ribs (51), the top (52a) of said cone being centred on the centre (21a) of the refilling opening and the surface of the cone extending in direction of the internal wall (21b) of the refilling opening down to a base (52b), and
- a slot (53) between the base of the cone and the internal wall of the refilling opening.

8. A machine according to any one of the precedent claims wherein it comprises a diluent fluid system.

9. A machine according to any one of the precedent claims wherein it comprises a mixing chamber for contacting a dose of beverage ingredient and the diluent.

10. System for preparing a beverage by mixing a bulk beverage ingredient with a diluent comprising :
- a machine according to any one of Claim 1 to 9, and
- a cartridge (101) of bulk beverage ingredient, said cartridge comprising :
• a vessel (102) presenting a closed end (103) and an opened end (104),
• a hopper (105) placed inside the vessel and tapering to a discharge outlet (106) in direction of the vessel opened end (104), said discharge outlet (106) presenting a section smaller than the section of the refilling opening of the refillable multi-dose storing container (21).

11. A system according of the precedent claims wherein the cartridge (101) for storing the flowable beverage ingredient comprises a tearable membrane (107) closing the hopper (105) and the vessel (102).

12. A system according to Claim 10 or 11 wherein in the machine (1), the refilling opening of the refillable multi-dose storing container presents an interface (5) for cooperating with a cartridge (101) of bulk beverage ingredient, said interface (5) comprising :
- several ribs (51) extending from the internal wall (21b) of the refilling opening to the centre of the refilling opening (21a),
- a cone (52) supported by the ribs (51), the top (52a) of said cone being centred on the centre (21a) of the refilling opening and the surface of the cone extending in direction of the internal wall (21b) of the refilling opening down to a base (52b), and
- a slot (53) between the base of the cone and the internal wall of the refilling opening,
and wherein the discharge outlet (106) of the cartridge presents a section greater than the section of the base of the cone and smaller than the section of the refilling opening (21).

13. Process for refilling a machine according to any one of Claim 1 to 9 comprising at least the steps of :
- removing the assembly of the refillable multi-dose storing container (2) and the dosing unit (3),
- putting the assembly on a flat surface with the refilling opening (21) upwards,
- removing the removable cover (22) of the refilling opening,
- refilling the refillable multi-dose storing container through the refilling opening,
- placing the removable cover (22) of the refilling opening back,
- introducing the assembly of the refillable multi-dose storing container and the dosing unit into the machine back.

14. Process according to the precedent claim wherein the step of refilling the refillable multi-dose storing container (2) is made by pushing the discharge outlet (42a) of a container for storing the flowable beverage concentrate against the refilling opening.

15. Use of a cartridge (101) of bulk beverage ingredient, said cartridge comprising :
• a vessel (102) presenting a closed end (103) and an opened end (104),
• a hopper (105) placed inside the vessel and tapering to a discharge outlet (106) in direction of the vessel opened end (104), said discharge outlet (106) presenting a section smaller than the section of the refilling opening of the refillable multi-dose storing container (21),
to refill the refillable multi-dose storing container (2) of a machine according to any one of Claims 1 to 9.

## Patentansprüche

1. Maschine (1) zum Herstellen von Getränken aus einer losen Getränkezutat, umfassend:
- einen nachfüllbaren Mehrfachdosis-Speicherbehälter (2) für die Speicherung der losen Getränkezutat, wobei der Behälter ein Speichervolumen aufweist, das zwischen einer offenen Bodenwand (201), einer oberen Wand (202) und Seitenwänden (203) definiert ist, und wobei der nachfüllbare Mehrfachdosis-Speicherbehälter eine Öffnung (21) zum Nachfüllen des Behälters mit einer losen Getränkezutat und eine abnehmbare Abdeckung (22) zum Verschließen der Öffnung zum Nachfüllen des Behälters umfasst,
- eine Dosiereinheit (3) zum Dosieren der gespeicherten losen Getränkezutat, wobei die Dosiereinheit mit dem offenen Boden (201) des nachfüllbaren Mehrfachdosis-Speicherbehälters zusammenwirkt,
wobei die Maschine einen Aufnahmebereich (11) zum vorübergehenden Aufnehmen der Anordnung aus dem nachfüllbaren Mehrfachdosis-Speicherbehälter (2) und der am Boden des Behälters angeordneten Dosiereinheit (3) umfasst,
**dadurch gekennzeichnet, dass** die Öffnung (21) zum Nachfüllen des Behälters mit der losen Getränkezutat in einem ersten Abschnitt (23) der Seitenwände des nachfüllbaren Mehrfachdosis-Speicherbehälters positioniert ist.

2. Maschine nach Anspruch 1, wobei ein zweiter Abschnitt (24) der Seitenwände des nachfüllbaren Mehrfachdosis-Speicherbehälters, der dem ersten Abschnitt (23) der Seitenwände gegenüberliegt, eine solche Form aufweist, dass beim Entnehmen des nachfüllbaren Mehrfachdosis-Speicherbehälters aus der Maschine der Behälter auf einer flachen horizontalen Oberfläche (S) so aufliegen kann, dass die Öffnung zum Nachfüllen des Behälters nach oben weist.

3. Maschine nach dem vorstehenden Anspruch, wobei der nachfüllbare Mehrfachdosis-Speicherbehälter mindestens ein, vorzugsweise zwei, Bein(e) (25, 26) umfasst, die sich von der Oberfläche des zweiten Abschnitts der lateralen Seite in Richtung des Bodens des Tanks erstrecken.

4. Maschine nach dem vorstehenden Anspruch, wobei der Aufnahmebereich (11) mindestens ein, vorzugsweise zwei, Gehäuse (250, 260) aufweist, in das das mindestens eine, vorzugsweise die mindestens zwei, Bein(e) (25, 26) des Behälters jeweils eingreifen.

5. Maschine nach einem der vorstehenden Ansprüche, wobei der nachfüllbare Mehrfachdosis-Speicherbehälter (2) einen Magneten oder ein Metallstück umfasst, wobei der Magnet oder das Metallstück so positioniert ist, dass er bzw. es mit einem Metallstück oder einem Magneten innerhalb des Aufnahmebereichs der Getränkeherstellungsmaschine zusammenwirkt.

6. Maschine nach einem der vorstehenden Ansprüche, wobei die Nachfüllöffnung (21) des nachfüllbaren Mehrfachdosis-Speicherbehälters eine Schnittstelle (5) aufweist, die mit einer Kartusche (101) einer losen Getränkezutat zusammenwirkt, wobei die Kartusche umfasst:
• ein Gefäß (102), das ein geschlossenes Ende (103) und ein offenes Ende (104) aufweist,
• einen Trichter (105), der innerhalb des Gefäßes angeordnet ist und sich zu einer Abgabeöffnung (106) zum offenen Ende (104) des Gefäßes hin verjüngt, wobei diese Abgabeöffnung einen Querschnitt aufweist, der kleiner ist als der Querschnitt der Nachfüllöffnung des nachfüllbaren Mehrfachdosis-Speicherbehälters (21).

7. Maschine nach Anspruch 6, wobei die Schnittstelle (5) umfasst:
- mehrere Rippen (51), die sich von der Innenwand (21b) der Nachfüllöffnung zur Mitte der Nachfüllöffnung (21a) erstrecken,
- einen Konus (52), der von den Rippen (51) getragen wird, wobei die Oberseite (52a) des Konus in der Mitte (21a) der Nachfüllöffnung zentriert ist und die Oberfläche des Konus sich in Richtung der Innenwand (21b) der Nachfüllöffnung hinunter zu einem Unterteil (52b) erstreckt, und
- einen Spalt (53) zwischen dem Unterteil des Konus und der Innenwand der Nachfüllöffnung.

8. Maschine nach einem der vorstehenden Ansprüche, wobei sie ein Verdünnungsflüssigkeitssystem umfasst.

9. Maschine nach einem der vorstehenden Ansprüche, wobei sie eine Mischkammer umfasst, um eine Dosis der Getränkezutat mit dem Verdünnungsmittel in Kontakt zu bringen.

10. System zum Herstellen eines Getränks durch Mischen einer losen Getränkezutat mit einem Verdünnungsmittel, umfassend:
- eine Maschine nach einem der Ansprüche 1 bis 9, und
- eine Kartusche (101) einer losen Getränkezutat, wobei die Kartusche umfasst:
• ein Gefäß (102), das ein geschlossenes Ende (103) und ein offenes Ende (104) aufweist,
• einen Trichter (105), der innerhalb des Gefäßes angeordnet ist und sich zu einer Abgabeöffnung (106) zu einem offenen Ende (104) des Gefäßes hin verjüngt, wobei diese Abgabeöffnung (106) einen Querschnitt aufweist, der kleiner ist als der Querschnitt der Nachfüllöffnung des nachfüllbaren Mehrfachdosis-Speicherbehälters (21).

11. System nach einem der vorstehenden Ansprüche, wobei die Kartusche (101) zur Aufbewahrung der rieselfähigen Getränkezutat eine aufreißbare Membran (107) umfasst, die den Trichter (105) und das Gefäß (102) verschließt.

12. System nach Anspruch 10 oder 11, wobei in der Maschine (1) die Nachfüllöffnung des nachfüllbaren Mehrfachdosis-Speicherbehälters eine Schnittstelle (5) zum Zusammenwirken mit einer Kartusche (101) einer losen Getränkezutat aufweist, wobei die Schnittstelle (5) umfasst:
- mehrere Rippen (51), die sich von der Innenwand (21b) der Nachfüllöffnung zur Mitte der Nachfüllöffnung (21a) erstrecken,
- einen Konus (52), der von den Rippen (51) getragen wird, wobei die Oberseite (52a) des Konus in der Mitte (21a) der Nachfüllöffnung zentriert ist und die Oberfläche des Konus sich in Richtung der Innenwand (21b) der Nachfüllöffnung hinunter zu einem Unterteil (52b) erstreckt, und
- einen Spalt (53) zwischen dem Unterteil des Konus und der Innenwand der Nachfüllöffnung,
und wobei die Abgabeöffnungen (106) der Kartusche einen Querschnitt aufweist, der größer ist als der Querschnitt des Unterteils des Konus und kleiner ist als der Querschnitt der Nachfüllöffnung (21).

13. Verfahren zum Nachfüllen einer Maschine nach einem der Ansprüche 1 bis 9, umfassend zumindest die Schritte:
- Entnehmen der Anordnung aus dem nachfüllbaren Mehrfachdosis-Speicherbehälter (2) und der Dosiereinheit (3),
- Aufstellen der Anordnung auf einer flachen Oberfläche mit der Nachfüllöffnung (21) nach oben,
- Abnehmen der abnehmbaren Abdeckung (22) der Nachfüllöffnung,
- Nachfüllen des nachfüllbaren Mehrfachdosis-Speicherbehälters durch die Nachfüllöffnung hindurch,
- Wiederanbringen der abnehmbaren Abdeckung (22) der Nachfüllöffnung,
- Wiedereinsetzen der Anordnung aus dem nachfüllbaren Mehrfachdosis-Speicherbehälter und der Dosiereinheit in die Maschine.

14. Verfahren nach dem vorstehenden Anspruch, wobei der Schritt des Nachfüllens des nachfüllbaren Mehrfachdosis-Speicherbehälters (2) ausgeführt wird, indem die Abgabeöffnung (42a) eines Behälters zum Speichern des rieselfähigen Getränkekonzentrats gegen die Nachfüllöffnung gedrückt wird.

15. Verwendung einer Kartusche (101) einer losen Getränkezutat, wobei die Kartusche umfasst:
• ein Gefäß (102), das ein geschlossenes Ende (103) und ein offenes Ende (104) aufweist,
• einen Trichter (105), der innerhalb des Gefäßes angeordnet ist und sich zu einer Abgabeöffnung (106) in Richtung des offenen Endes (104) des Gefäßes verjüngt, wobei die Abgabeöffnung (106) einen Querschnitt aufweist, der kleiner ist als der Querschnitt der Nachfüllöffnung des nachfüllbaren Mehrfachdosis-Speicherbehälters (21),
um den nachfüllbaren Mehrfachdosis-Speicherbehälter (2) einer Maschine nach einem der Ansprüche 1 bis 9 nachzufüllen.

## Revendications

1. Machine (1) de préparation de boissons à partir d'un ingrédient de boisson en vrac, ladite machine comprenant :
- un récipient de stockage de multiples doses rechargeable (2) destiné à stocker l'ingrédient de boisson en vrac, ledit récipient présentant un volume de stockage défini entre une paroi de fond ouverte (201), une paroi supérieure (202) et des parois latérales (203) et ledit récipient de stockage de multiples doses rechargeable comprenant une ouverture (21) pour recharger le récipient avec un ingrédient de boisson en vrac et un couvercle amovible (22) pour fermer ladite ouverture pour la recharge du récipient,
- une unité de dosage (3) pour doser l'ingrédient de boisson en vrac stocké, ladite unité de dosage coopérant avec le fond ouvert (201) du récipient de stockage de multiples doses rechargeable,
où la machine comprend une zone de réception (11) destinée à recevoir de façon amovible l'ensemble du récipient de stockage de multiples doses rechargeable (2) et de l'unité de dosage (3) positionnée au fond du récipient,
**caractérisée en ce que** l'ouverture (21) destinée à recharger le récipient avec l'ingrédient de boisson en vrac est positionnée sur une première partie (23) des parois latérales du récipient de stockage de multiples doses rechargeable.

2. Machine selon la revendication 1, dans laquelle une deuxième partie (24) des parois latérales du récipient de stockage de multiples doses rechargeable opposée à la première partie (23) des parois latérales présente une forme telle que lorsque le récipient de stockage de multiples doses rechargeable est retiré de la machine, le récipient peut reposer sur une surface horizontale plate (S) avec l'ouverture destinée à recharger le récipient faisant face vers le haut.

3. Machine selon la revendication précédente, dans laquelle le récipient de stockage de multiples doses rechargeable comprend au moins un, de préférence deux, montant(s) (25, 26) s'étendant depuis la surface de la deuxième partie du côté latéral en direction du fond du réservoir.

4. Machine selon la revendication précédente, dans laquelle la zone de réception (11) présente au moins un, de préférence deux, logement(s) (250, 260) dans lesquels l'au moins un, de préférence deux, montant(s) (25, 26) du récipient viennent en prise, respectivement.

5. Machine selon l'une quelconque des revendications précédentes, dans laquelle le récipient de stockage de multiples doses rechargeable (2) comprend un aimant ou une pièce métallique, ledit aimant ou ladite pièce métallique étant positionné afin de coopérer avec une pièce métallique ou un aimant, respectivement, à l'intérieur de la zone de réception de la machine de préparation de boisson.

6. Machine selon l'une quelconque des revendications précédentes, dans laquelle l'ouverture de recharge (21) du récipient de stockage de multiples doses rechargeable présente une interface (5) destinée à coopérer avec une cartouche (101) d'ingrédient de boisson en vrac, ladite cartouche comprenant :
• un réceptacle (102) présentant une extrémité fermée (103) et une extrémité ouverte (104),
• une trémie (105) placée à l'intérieur du réceptacle et s'effilant vers une sortie d'écoulement (106) en direction de l'extrémité ouverte de réceptacle (104), ladite sortie d'écoulement présentant une section inférieure à la section de l'ouverture de recharge du récipient de stockage de multiples doses rechargeable (21).

7. Machine selon la revendication 6, dans laquelle l'interface (5) comprend :
- plusieurs nervures (51) s'étendant depuis la paroi interne (21b) de l'ouverture de recharge vers le centre de l'ouverture de recharge (21a),
- un cône (52) supporté par les nervures (51), le sommet (52a) dudit cône étant centré sur le centre (21a) de l'ouverture de recharge et la surface du cône s'étendant en direction de la paroi interne (21b) de l'ouverture de recharge vers le bas jusqu'à une base (52b) et
- une fente (53) entre la base du cône et la paroi interne de l'ouverture de recharge.

8. Machine selon l'une quelconque des revendications précédentes, dans laquelle elle comprend un système de fluide diluant.

9. Machine selon l'une quelconque des revendications précédentes, dans laquelle elle comprend une chambre de mélange pour mettre en contact une dose de l'ingrédient de boisson et le diluant.

10. Système de préparation d'une boisson par mélange d'un ingrédient de boisson en vrac avec un diluant, comprenant :
- une machine selon l'une quelconque des revendications 1 à 9 et
- une cartouche (101) d'ingrédient de boisson en vrac, ladite cartouche comprenant :
• un réceptacle (102) présentant une extrémité fermée (103) et une extrémité ouverte (104),
• une trémie (105) placée à l'intérieur du réceptacle et s'effilant vers une sortie d'écoulement (106) en direction de l'extrémité ouverte de réceptacle (104), ladite sortie d'écoulement (106) présentant une section inférieure à la section de l'ouverture de recharge du récipient de stockage de multiples doses rechargeable (21).

11. Système selon les revendications précédentes, dans lequel la cartouche (101) destinée au stockage de l'ingrédient de boisson fluide comprend une membrane déchirable (107) fermant la trémie (105) et le réceptacle (102).

12. Système selon la revendication 10 ou 11, dans lequel dans la machine (1), l'ouverture de recharge du récipient de stockage de multiples doses rechargeable présente une interface (5) destinée à coopérer avec une cartouche (101) d'ingrédient de boisson en vrac, ladite interface (5) comprenant :
- plusieurs nervures (51) s'étendant depuis la paroi interne (21b) de l'ouverture de recharge vers le centre de l'ouverture de recharge (21a),
- un cône (52) supporté par les nervures (51), le sommet (52a) dudit cône étant centré sur le centre (21a) de l'ouverture de recharge et la surface du cône s'étendant en direction de la paroi interne (21b) de l'ouverture de recharge vers le bas jusqu'à une base (52b) et
- une fente (53) entre la base du cône et la paroi interne de l'ouverture de recharge
et dans lequel la sortie d'écoulement (106) de la cartouche présente une section supérieure à la section de la base du cône et inférieure à la section de l'ouverture de recharge (21).

13. Procédé de recharge d'une machine selon l'une quelconque des revendications 1 à 9, comprenant au moins les étapes consistant à :
- retirer l'ensemble du récipient de stockage de multiples doses rechargeable (2) et de l'unité de dosage (3),
- placer l'ensemble sur une surface plate avec l'ouverture de recharge (21) vers le haut,
- retirer le couvercle amovible (22) de l'ouverture de recharge,
- recharger le récipient de stockage de multiples doses rechargeable à travers l'ouverture de recharge,
- replacer le couvercle amovible (22) de l'ouverture de recharge,
- réintroduire l'ensemble du récipient de stockage de multiples doses rechargeable et de l'unité de dosage dans la machine.

14. Procédé selon la revendication précédente, dans lequel l'étape de recharge du récipient de stockage de multiples doses rechargeable (2) est réalisée en poussant la sortie d'écoulement (42a) d'un récipient destiné à stocker le concentré de boisson fluide contre l'ouverture de recharge.

15. Utilisation d'une cartouche (101) d'ingrédient de boisson en vrac, ladite cartouche comprenant :
• un réceptacle (102) présentant une extrémité fermée (103) et une extrémité ouverte (104),
• une trémie (105) placée à l'intérieur du réceptacle et s'effilant vers une sortie d'écoulement (106) en direction de l'extrémité ouverte de réceptacle (104), ladite sortie d'écoulement (106) présentant une section inférieure à la section de l'ouverture de recharge du récipient de stockage de multiples doses rechargeable (21),
pour recharger le récipient de stockage de multiples doses rechargeable (2) d'une machine selon une quelconque des revendications 1 à 9.
